# EUROPEAN PATENT APPLICATION

(11) **EP 4 794 012 A1**
(43) Date of publication of application: **19.08.2026**
(21) Application number: 26158165.6
(22) Date of filing: 12.02.2026
(51) Int. Cl.: H01M 4/131, H01M 4/1391, H01M 4/36, H01M 4/505, H01M 4/525, H01M 4/62, H01M 10/0525, H01M 10/0562

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(30) Priority: 13.02.2025 KR 20250018946
(71) Applicant: SK On Co., Ltd., Seoul 03161 (KR)
(72) Inventor: KONG, Nyung Joo, Daejeon 34124 (KR); KIM, Jong Hwa, Daejeon 34124 (KR); YOON, Jeong Bae, Daejeon 34124 (KR); PARK, Sung Soon, Daejeon 34124 (KR); YOO, Yeong Bin, Daejeon 34124 (KR)
(74) Representative: Prüfer & Partner mbB Patentanwälte · Rechtsanwälte

(57) **Abstract**

A cathode active material for a lithium secondary battery, a method of fabricating the same, and a lithium secondary battery including the same are provided. The cathode active material for a lithium secondary battery includes a lithium-transition metal oxide particle, and a coating layer formed on a surface of the lithium-transition metal oxide particle and including Li₃PO₄ and an oxide represented by Li_{w}Tiₓ(PO₄)₃-(Al₂O₃)_{y} (0≤w, x≥4/3, y>0, 0<x+y≤6, and 0.125 ≤y/x≤0.5). A content of the lithium phosphate in the coating layer is 10 mol% to 60 mol%.

## Description

### BACKGROUND

### 1. Field

The present disclosure relates to a cathode active material for a lithium secondary battery, a method of preparing the same, and a lithium secondary battery including the same. More particularly, the present disclosure relates to a lithium metal oxide-based cathode active material, a method of preparing the same, and a lithium secondary battery including the same.

### 2. Descriptions of the Related Art

A secondary battery that may be repeatedly charged and discharged is widely applied as a power source for portable electronic communication devices such as a camcorder, a mobile phone, a laptop PCs or the like, with developments of information communication and display industries. Recently, a battery pack including a secondary battery has been developed and applied as a power source for environmentally friendly vehicles such as an electric vehicle, a hybrid vehicle, or the like.

Examples of the secondary battery include a lithium secondary battery, a nickelcadmium battery, a nickel-hydrogen battery, or the like. The lithium secondary battery is widely developed and applied due to a high operating voltage, a high energy density per unit weight, a rapid charging rate, a compact dimension, or the like.

For example, the lithium secondary battery may include an electrode assembly including a cathode, an anode and a separator, and an electrolyte solution for impregnating the electrode assembly. The lithium secondary battery may further include an exterior material, e.g., in a pouch form, that accommodates the electrode assembly and the electrolyte solution.

A lithium metal oxide may be used as a cathode active material of the lithium secondary battery. When the lithium metal oxide is exposed to air or is in contact with the electrolyte solution, by-products of lithium or nickel may be generated on a surface of the lithium metal oxide due to a side reaction. Accordingly, life-span and operational stability of the lithium secondary battery may be degraded.

Particularly, in a lithium metal oxide including a high content of nickel, a large amount of lithium impurities (LiOH, Li₂CO₃, etc.) may be formed on the surface to degrade battery performance. When a washing process is performed to remove the lithium impurities, a specific surface area of the cathode active material may be increased, and a side reaction with the electrolyte solution may be activated. Accordingly, stability of a surface structure of the active material may be lowered.

### SUMMARY

According to an aspect of the present disclosure, there is provided a cathode active material for a lithium secondary battery having improved electrochemical properties and crystal properties.

According to another aspect of the present disclosure, there is provided a method of preparing a cathode active material for a lithium secondary battery having improved electrochemical properties and crystal properties.

According to another aspect of the present disclosure, there is provided a lithium secondary battery including the cathode active material.

A cathode active material for a lithium secondary battery includes a lithium-transition metal oxide particle, and a coating layer formed on a surface of the lithium-transition metal oxide particle. The coating layer includes Li₃PO₄ and an oxide represented by Chemical Formula 1. A content of Li₃PO₄ in the coating layer is in a range from 10 mol% to 60 mol%.

[Chemical Formula 1] Li_{w}Tiₓ(PO₄)₃-(Al₂O₃)_{y}

In Chemical Formula 1. 0≤w, x≥4/3, y>0, 0<x+y≤6, and 0.125 ≤y/x≤0.5.

In some embodiments, the lithium-transition metal oxide particle may include a lithium-transition metal oxide particle having a single particle form.

In some embodiments, a content of Li₃PO₄ in the coating layer may be in a range from 10 mol% to 45 mol%.

In some embodiments, the oxide of Chemical Formula 1 may include a NASICON structure.

In some embodiments, a total content of Al, Ti and P in the oxide represented by Chemical Formula 1 is 5,000 wtppm or less.

In some embodiments, an average particle diameter (D50) of particles of the cathode active material may be in a range from 2.9 µm to 4.0 µm.

In some embodiments, a span value of particles of the cathode active material defined by Equation 1 may be in a range from 1.06 to 1.35.$span value = \left(D90-D10\right) / D 50$

In Equation 1, D10, D50, and D90 are particle diameters at 10%, 50% and 90% points, respectively, in a volume particle size distribution of the cathode active material measured by a laser diffraction method.

In some embodiments, a residual lithium content on a surface of the cathode active material may be 9,500 wtppm or less.

In some embodiments, a residual lithium content on a surface of the cathode active material may be 9,000 wtppm or less.

A lithium secondary battery includes a cathode including the above-described cathode active material for a lithium secondary battery, and an anode opposing the cathode.

In a method of preparing a cathode active material for a lithium secondary battery, a transition metal precursor, a lithium source, an Al source, a Ti source and a P source may be mixed to form a mixture. The mixture is heat-treated. The P source includes Li₃PO₄, The prepared cathode active material includes a lithium-transition metal oxide particle, and a coating layer formed on a surface of the lithium-transition metal oxide particle. The coating layer includes Li₃PO₄ and an oxide represented by Chemical Formula 1. A content of Li₃PO₄ in the coating layer is in a range from 10 mol% to 60 mol%.

[Chemical Formula 1] Li_{w}Tiₓ(PO₄)₃-(Al₂O₃)_{y}

In Chemical Formula 1. 0≤w, x≥4/3, y>0, 0<x+y≤6, and 0.125 ≤y/x≤0.5.

In some embodiments, a molar ratio of the Al source, the Ti source, and the P source may be (1 to 4):(1 to 4):(2 to 3).

In some embodiments, at least one of forming the mixture and the heat-treating may be performed by a dry process.

In the cathode active material according to embodiments of the present disclosure, an amount of a residual lithium may be reduced and an ion conductivity may be increased by a coating layer.

In a method of preparing a cathode active material for a lithium secondary battery according to embodiments of the present disclosure, Li₃PO₄ may be used, so that crystals of the cathode active material may be effectively grown, and a content of the residual lithium may be reduced.

The cathode active material and the lithium secondary battery of the present disclosure may be widely applied in green technology fields such as a electric vehicle, a battery charging station, a solar power generation, a wind power generation using batteries, and may also be used in eco-friendly electric vehicles and hybrid vehicles for preventing climate change by suppressing air pollution and greenhouse gas emission.

### BRIEF DESCRIPTION OF THE DRAWINGS

FIG. 1 is a schematic cross-sectional view illustrating a structure of a cathode active material for a lithium secondary battery according to example embodiments.
FIGS. 2 and 3 are a schematic plan view and a schematic cross-sectional view, respectively, illustrating a lithium secondary battery according to example embodiments.

### DETAILED DESCRIPTION OF THE EMBODIMENTS

According to embodiments of the present disclosure, a cathode active material 10 for a lithium secondary battery including a lithium-transition metal oxide particle 20 and a coating layer 30 is provided.

Additionally, according to embodiments of the present disclosure, a lithium secondary battery including a cathode including the cathode active material 10 and an anode opposing the cathode is provided.

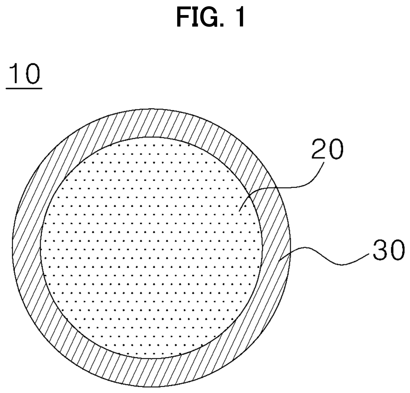

FIG. 1 is a schematic cross-sectional view illustrating a structure of a cathode active material for a lithium secondary battery according to example embodiments.

Referring to FIG. 1, the cathode active material 10 (hereinafter, that may be abbreviated as a cathode active material) includes lithium-transition metal oxide particles 20, and a coating layer 30 formed on a surface of the lithium-transition metal oxide particle 20.

The cathode active material 10 may include the lithium-transition metal oxide particles 20 as a core portion.

In some embodiments, the lithium-transition metal oxide particle 20 may have a single particle form. Accordingly, mechanical and chemical stability of the cathode active material 10 may be improved. Thus, life-span characteristics and capacity characteristics of the cathode active material 10 may both be improved.

The term, "single particle" herein may be used to exclude a secondary particle structure formed by agglomeration of a plurality of primary particles (for example, 10 or more, 20 or more, 30 or more, 40 or more, or 50 or more of primary particles).

In some embodiments, the lithium-transition metal oxide particle 20 may have a granular single particle form or a spherical single particle form.

In some embodiments, the cathode active material 10 or the lithium-transition metal oxide particle 20 may include a layered structure or a crystal structure represented by Chemical Formula 2 below.

[Chemical Formula 2] LiₓNiₐM_{b}O_{2+z}

In Chemical Formula 2, 0.9≤x≤1.2, 0.5≤a≤0.99, 0.01≤b≤0.5, and -0.5≤z≤0.1. M may include Co, Mn, and/or Al.

The chemical structure represented by Chemical Formula 2 represents a bonding relationship included in the layered structure or the crystal structure of the cathode active material 10 or the lithium-transition metal oxide particles 20, and does not exclude another additional element. For example, M may include Co, Mn and/or Al, and Co, Mn and/or Al may be provided as main active elements of the cathode active material 10 together with Ni. Chemical Formula 2 is provided to express the bonding relationship of the main active elements, and is to be understood as a formula that encompasses introduction and substitution of the additional element.

In an embodiment, an auxiliary element for enhancing chemical stability of the cathode active material 10 or the layered structure/crystal structure may be further included in addition to the main active elements. The auxiliary element may be incorporated into the layered structure/crystal structure to form a bond, and this case is also be understood as being included within the scope of the chemical structure represented by Chemical Formula 2.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

For example, the cathode active material 10 or the lithium-transition metal oxide particle 20 may include a layered structure or a crystal structure represented by Chemical Formula 2-1 below.

[Chemical Equation 2-1] LiₓNiₐM1_{b1}M2_{b2}O_{2+z}

In Chemical Formula 2-1, M1 may include Co, Mn, and/or Al. M2 may include the above-described auxiliary element. In Chemical Formula 2-1, 0.9≤x1≤1.2, 0.5≤a≤0.99, 0.01≤b1+b2≤0.5, and -0.5≤z≤0.1.

In some embodiments, the cathode active material 10 may further include a doping element or a coating element. For example, elements substantially the same as or similar to the above-described auxiliary element may be used as the doping element or the coating element. For example, one or a combination of two or more of the above-described elements may be used as the doping element or the coating element.

The doping element or the coating element may exist on a surface of the lithium-transition metal oxide particle, or may penetrate through the surface of the lithium-transition metal oxide particle to be included in a bonding structure represented by Chemical Formula 2 or Chemical Formula 2-1.

The cathode active material may include a nickel-cobalt-manganese (NCM)-based lithium oxide. In this case, an NCM-based lithium oxide having an increased nickel content may be used.

A content of Ni in the NCM-based lithium oxide (e.g., a mole fraction of nickel among the total number of moles of nickel, cobalt and manganese) may be 50 mol% or more, 60 mol% or more, 70 mol% or more, 80 mol% or more, 90 mol% or more, or 95 mol% or more. In some embodiments, the content of Ni may be in a range from 80 mol% to 98 mol%, from 82 mol% to 98 mol%, from 83 mol% to 98 mol%, from 84 mol% to 98 mol%, from 85 mol% to 98 mol%, from 88 mol% to 98 mol%, or from 90 mol% to 98 mol%.

In example embodiments, the coating layer 30 includes Li₃PO₄ and an oxide represented by Chemical Formula 1.

[Chemical Formula 1] Li_{w}Tiₓ(PO₄)₃-(Al₂O₃)_{y} (0≤w, x≥4/3, y>0, 0<x+y≤6, and 0.125 ≤y/x≤0.5).

In some embodiments, in Chemical Formula 1, 0<w≤10, 2≤w≤10, 3≤w≤10, 5≤w≤10, 6≤w≤10, 2≤w≤9, 3≤w≤9, 5≤w≤9, or 6≤w≤9.

A synthesis of the single particle may require a higher calcination temperature condition than that for forming a particle in the form of the secondary particle, and the residual lithium may occur due to the high calcination temperature. The residual lithium may cause various side reactions such as electrolyte decomposition, thereby deteriorating cell performance.

The cathode active material 10 according to embodiments includes a coating layer 30 including Ti, Al and P elements. Accordingly, an enhanced particle growth may be induced even through a calcination at a low temperature, so that the cathode active material 10 having the reduced residual lithium may be obtained.

In an embodiment, the oxide of Chemical Formula 1 may have a NASICON structure. In this case, the residual lithium may be stored in the coating layer 30, and the residual lithium may be additionally reduced.

According to embodiments of the present disclosure, Li₃PO₄ may be included in the coating layer 30, so that thermal stability and an ion conductivity of the cathode active material 10 may both be improved.

When Al₂O₃ is partially substituted in Li_{w}Tiₓ(PO₄)₃, Al³⁺ having a lower oxidation number than that of Ti⁴⁺ may provide a site for a presence of lithium to achieve an electrical neutrality. Thus, Li_{w}Tiₓ(PO₄)₃-Al₂O₃ has an improved ion conductivity compared to that of Li_{w}Tiₓ(PO₄)₃, and may increase an amount of acceptable lithium. Accordingly, the amount of residual lithium on the surface of the cathode active material 10 may be reduced.

According to example embodiments, a content of Li₃PO₄ in the coating layer 30 (e.g., based on the total number of moles of compounds included in the coating layer 30, or the total number of moles of the oxide of Chemical Formula 1 and Li₃PO₄) is in a range from 10 mol% to 60 mol%.

In some embodiments, the content of Li₃PO₄ in the coating layer 30 may be in a range from 10 mol% to 45 mol%.

In some embodiments, the content of Li₃PO₄ in the coating layer 30 may be in a range from 14 mol% to 35 mol%, or from 20 mol% to 30 mol%.

In the above range, Li₃PO₄ may fill between pores to promote a material transfer for a crystal growth. Additionally, a particle size of the cathode active material 10 may be effectively increased even at a low temperature.

Further, the residual lithium on the surface of the cathode active material 10 may be more effectively reduced, and a capacity retention of a lithium secondary battery may be improved.

For example, if the content of Li₃PO₄ in the coating layer 30 exceeds 60 mol%, storage of lithium in the coating layer 30 during calcination of the cathode active material 10 may be hindered to increase the residual lithium. Accordingly, various side reactions may be caused, and performance of the lithium secondary battery may be degraded.

For example, if the content of Li₃PO₄ in the coating layer 30 is less than 10 mol%, pores of the cathode active material 10 may not be sufficiently filled by Li₃PO₄. Accordingly, particle growth of the cathode active material 10 may be delayed. Further, an aqueous solubility of lithium may be lowered, and thus the ion conductivity of the secondary battery may be reduced.

In example embodiments, the oxide of Chemical Formula 1 may include the NASICON structure. Thus, oxygen stabilization may be implemented in the cathode active material 10, and thermal stability and the ion conductivity may be improved together.

According to example embodiments, a total content of Al, Ti and P in the oxide represented by Chemical Formula 1 may be 5,000 wtppm or less, 4,000 wtppm or less, 3,600 wtppm or less, or 3,200 wtppm or less.

In the above range, an amount of the residual lithium may be reduced, and the capacity retention of the secondary battery may be further increased.

According to example embodiments, an average particle diameter (D50) of the cathode active material 10 may be in a range from 2.9 µm to 4.0 µm, from 2.95 µm to 3.6 µm, or from 3.0 µm to 3.55 µm.

In the above range, structural stability of the cathode active material 10 may be increased, and a power and a capacity of the secondary battery may be improved.

According to example embodiments, a span value of the cathode active material 10 defined by Equation 1 below may be in a range from 1.06 to 1.35.$span value = \left(D90-D10\right) / D 50$

In Equation 1, D10, D50 and D90 are particle diameters at 10%, 50% and 90% points, respectively, in a volume particle size distribution of the cathode active material 10 measured using a laser diffraction method (Microtrac, S3500).

In some embodiments, the span value of particles of the cathode active material 10 defined by Equation 1 may be in a range from 1.06 to 1.25, or from 1.06 to 1.20.

According to example embodiments, the residual lithium content on the surface of the cathode active material 10 may be 9,500 wtppm or less, 9,000 wtppm or less, 8,800 wtppm or less, 8,700 wtppm or less, or 8,600 wtppm or less.

In the above range, a side reaction between the residual lithium and a surface of the cathode active material 10 may be effectively suppressed, and performance of the lithium secondary battery may be stably maintained.

In a method for preparing the cathode active material 10 for a secondary battery according to example embodiments, a transition metal precursor, a lithium source, an Al source, a Ti source, and a P source may be mixed to form a mixture. The mixture may be subjected to a heat treatment. The P source may include Li₃PO₄. The obtained cathode active material 10 may include lithium-transition metal oxide particles 20, and a coating layer 30 formed on a surface of the lithium-transition metal oxide particle 20 and including Li₃PO₄ and the oxide represented by Chemical Formula 1.

[Chemical Formula 1] Li_{w}Tiₓ(PO₄)₃-(Al₂O₃)_{y} (0≤w, x≥4/3, y>0, 0<x+y≤6, and 0.125 ≤y/x≤0.5).

According to example embodiments, active material metal salts may be prepared. The active material metal salts may include a nickel salt. The active material metal salts may include a nickel salt, a manganese salt and a cobalt salt.

Examples of the nickel salt may include nickel sulfate (NiSO₄), nickel hydroxide (Ni(OH)₂), nickel nitrate (Ni(NO₃)₂), nickel acetate (Ni(CH₃CO₂)₂), a hydrate thereof, or the like.

Examples of the manganese salt may include manganese sulfate (MnSO₄), manganese hydroxide (Mn(OH)₂), manganese nitrate (Mn(NO₃)₂), manganese acetate (Mn(CH₃CO₂)₂), a hydrates there, or the like.

Examples of the cobalt salt may include cobalt sulfate (CoSO₄), cobalt hydroxide (Co(OH)₂), cobalt nitrate (Co(NO₃)₂), cobalt carbonate (CoCO₃), a hydrate thereof, or the like.

In an embodiment, nickel sulfate, manganese sulfate and cobalt sulfate may be used as the nickel salt, the manganese salt and the cobalt salt, respectively.

In some embodiments, a salt, a hydroxide or an oxide of at least one of B, Al, Si, Ti, V, Fe, Cu, Zn, Zr, Mo, and W may also be used together.

According to example embodiments, a transition metal precursor may be obtained by mixing and reacting the above-described active material metal salts through, e.g., a coprecipitation. For example, the transition metal precursor may be prepared in the form of a nickel-manganese-cobalt hydroxide.

To promote the coprecipitation reaction, a precipitating agent and/or a chelating agent may be used. The precipitating agent may include an alkaline compound such as sodium hydroxide (NaOH), sodium carbonate (Na₂CO₃), or the like. The chelating agent may include, e.g., aqueous ammonia, ammonium carbonate, or the like.

A mixture may be obtained by mixing the transition metal precursor, a lithium source, an Al source, a Ti source and a P source.

As the lithium source, lithium carbonate (Li₂CO₃), lithium nitrate (LiNO₃), lithium acetate (CH₃COOLi), lithium oxide (Li₂O), lithium hydroxide (LiOH), or the like, may be used. These may be used alone or in a combination of two or more therefrom. In an embodiment, lithium hydroxide may be used as the lithium source.

In some embodiments, the Ti source may include TiO₂, Ti(C₄H₉O)₄, TiO, TiAlN, TiC, Ti, or the like. These may be used alone or in a combination of two or more.

In some embodiments, the Al source may include Al₂O₃, Al(OH)₃, Al(NO₃)₃, or the like. These may be used alone or in a combination of two or more therefrom.

In some embodiments, the P source may include Li₃PO₄.

Li₃PO₄ may act as a sintering agent that may affect the synthesis and growth of the oxide of Chemical Formula 1. When LATP [Li_{w}Tiₓ(PO₄)₃-(Al₂O₃)_{y} (0≤w, x≥4/3, y>0, 0<x+y≤6, and 0.125 ≤y/x≤0.5)] is calcined using Li₃PO₄, heat transfer and crystal growth between the lithium-transition metal oxide particle 20 and the coating layer 30 may be promoted during the calcination process. Additionally, Li₃PO₄ may be included as an independent component of the coating layer 30 on the surface of the lithium-transition metal oxide particles 20.

Further, in a cathode calcination temperature range, Li₃PO₄ may be used as the P source of the coating layer 30 of the cathode active material 10. Li₃PO₄ may also fill between pores and promote a material transfer for crystal growth. Accordingly, particle growth may be induced even at a low temperature.

Thus, Li₃PO₄ may be used in a calcination process for coating LATP [Li_{w}Tiₓ(PO₄)₃-(Al₂O₃)_{y} (0≤w, x≥4/3, y>0, 0<x+y≤6, and 0.125 ≤y/x≤0.5)], so that formation of the coating layer 30 having the NASICON structure with an improved ion conductivity. and growth of the single particle may be promoted.

In some embodiments, the P source may further include NH₄H₂PO₄ (DAP), H₃PO₄, or the like.

According to example embodiments, the transition metal precursor may be mixed with the lithium source, the Al source, the Ti source, and the P source, and the the cathode active material may be prepared through a calcination process. For example, a temperature of the calcination may be in a range from 600 °C to 900 °C, from 700 °C to 880 °C, or from 750 °C to 870 °C. For example, a calcination time may be in a range from 8 hours to 25 hours, from 10 hours to 20 hours, or from 10 hours to 18 hours.

According to example embodiments, a molar ratio of the Al source, the Ti source, and the P source may be (1 to 4):(1 to 4):(2 to 3).

According to example embodiments, at least one of the formation of the mixture and the heat treatment may be performed by a dry process.

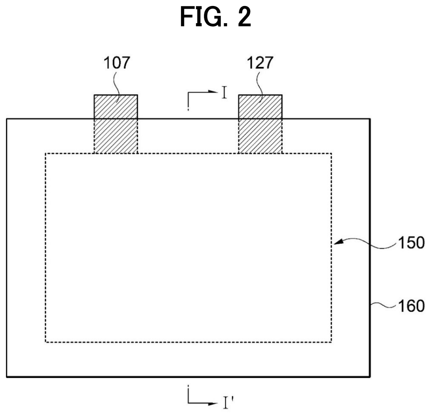

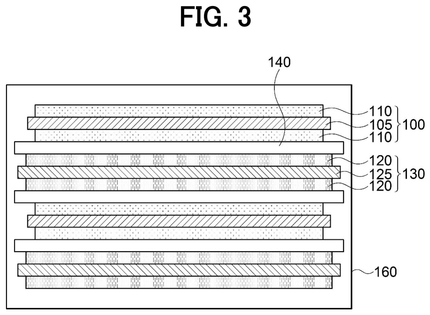

FIGS. 2 and 3 are a schematic plan view and a cross-sectional view, respectively, illustrating a lithium secondary battery according to example embodiments.

A cathode 100 includes a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may also include aluminum or stainless steel surface-treated with carbon, nickel, titanium, or silver. A thickness of the cathode current collector 105 is not particularly limited, but e.g., may be in a range from 10 µm to 50 µm.

The cathode active material layer 110 may be disposed on both surfaces (an upper surface and a lower surface in a thickness direction) of the cathode current collector 105.

The cathode active material layer 110 may include the cathode active material 10 according the embodiments of the present disclosure as described above. The cathode active material 10 may include the above-described lithium transition metal oxide.

The cathode active material layer 110 may further include another cathode active material in addition to the lithium-transition metal oxide. For example, the cathode active material 10 may further include a lithium cobalt oxide-based active material, a lithium manganese oxide-based active material, or a lithium iron phosphate-based (LFP) active material (for example, LiFePO₄), and may also further include a lithium-transition metal oxide that does not have a single particle structure (e.g., a secondary particle structure).

The cathode active material layer 110 may further include a conductive material. The conductive material may increase an electrical conductivity of the cathode active material layer which may be lowered by a binder.

The conductive material may include, e.g., a carbon-based conductive agent such as graphite, carbon black, acetylene black, ketjen black, graphene, carbon nanotube, a vapor-grown carbon fiber (VGCF), a carbon fiber, etc., and/or a metal-based conductive material including tin, tin oxide, titanium oxide, a perovskite material such as LaSrCoO₃ and LaSrMnO₃, etc. For example, the conductive material may include carbon nanotube.

A content of the conductive material may be in a range from 0.01 wt% to 3 wt% based on a total weight of the cathode active material layer 110. In some embodiments, the content of the conductive material may be in a range from 0.1 wt% to 1 wt% based on the total weight of the cathode active material layer.

The cathode active material layer may further include the binder. An adhesion force between the cathode active material 10 and the conductive material may be increased, and an adhesive force between the cathode active material layer 110 and the cathode current collector 105 may also be increased.

The binder may include, e.g., an organic binder such as a vinylidene fluoride-hexafluoropropylene copolymer (PVDF-co-HFP), polyvinylidene fluoride (PVDF), polyacrylonitrile, polymethylmethacrylate, or the like, or an aqueous binder such as a styrene-butadiene rubber (SBR). The binder may be used together with a thickener such as carboxymethyl cellulose (CMC).

For example, a PVDF-based binder may be used as a binder for forming the cathode. In this case, an amount of the binder for forming the cathode active material layer 110 may be reduced, and an amount of the cathode active material 10 may be relatively increased. Accordingly, the power and the capacity of the secondary battery may be improved.

A content of the binder may be in a range from 0.5 wt% to 5 wt% based on the total weight of the cathode active material layer. In some embodiments, the content of the binder may be in a range from 1 wt% to 3 wt% based on the total weight of the cathode active material layer 110.

The cathode active material layer 110 may also further include a thickener and/or a dispersant. For example, the cathode active material layer 110 may include a thickener such as carboxymethyl cellulose (CMC).

The cathode active material layer 110 may be formed from a cathode slurry composition including the cathode active material 10 and the binder. For example, the cathode slurry composition including the cathode active material 10 and the binder may be coated on the surface of the cathode current collector 105, and then dried and pressed to form the cathode active material layer 110.

According to example embodiments, the cathode slurry may further include a solvent. The solvent may include N-methyl-2-pyrrolidone (NMP), dimethylformamide, dimethylacetamide, N,N-dimethylaminopropylamine, ethylene oxide, tetrahydrofuran, or the like.

The coating of the cathode slurry may be performed by a gravure coating, a slot die coating, a multi-layer simultaneous die coating, an imprinting, a doctor blade coating, a dip coating, a bar coating, a casting, or the like, but is not limited thereto.

According to example embodiments, a thickness of the cathode active material layer is not particularly limited, but may be, e.g., in a range from 5 µm to 200 µm.

In some embodiments, the cathode active material layer may include two or more layers including different cathode active materials, conductive materials and/or binders. For example, the cathode active material layer 110 may include a first cathode active material layer and a second cathode active material layer. Types and/or contents of the active material, the conductive material and/or the binder of the first cathode active material layer may be different from those of the second cathode active material layer.

The anode 130 may include an anode current collector 125 and an anode active material layer 120 formed by coating an anode active material on the anode current collector 125.

As the anode active material, any material known in the related capable of intercalating and de-intercalating lithium ions may be used without a particular limitation. For example, a carbon-based material such as a crystalline carbon, an amorphous carbon, a carbon composite, a carbon fiber, etc.; a lithium alloy; silicon or tin, or the like, may be used.

Examples of the amorphous carbon may include hard carbon, coke, a mesocarbon microbeads (MCMB) calcined at 1500 °C or lower, a mesophase pitch-based carbon fiber (MPCF), or the like. Examples of the crystalline carbon may include a graphite-based carbon such as natural graphite, a graphitized coke, a graphitized MCMB, a graphitized MPCF, or the like. Elements included in the lithium alloy may include aluminum, zinc, bismuth, cadmium, antimony, silicon, lead, tin, gallium, or indium.

The anode current collector 125 may include, e.g., gold, stainless steel, nickel, aluminum, titanium, copper, or an alloy thereof, and may preferably include copper or a copper alloy.

In some embodiments, a slurry may be prepared by mixing and stirring the anode active material with a binder, a conductive material and/or a dispersant in a solvent. The slurry may be coated on at least one surface of the anode current collector 125, and then dried and pressed to obtain the anode 130.

As the binder and the conductive material, materials substantially the same as or similar to the above-described materials used in the cathode active material layer 110 may also be used. In some embodiments, a binder for forming the anode may include, e.g., an aqueous binder such as styrene-butadiene rubber (SBR) for compatibility with the carbon-based active material, and may be used together with a thickener such as carboxymethyl cellulose (CMC).

A separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may also include a non-woven fabric formed of a glass fiber with a high melting point, a polyethylene terephthalate fiber, or the like.

In some embodiments, an area (e.g., a contact area with the separator 140) and/or a volume of the anode 130 may be larger than that of the cathode 100. Accordingly, transfer of lithium ions generated from the cathode 100 may be facilitated to the anode 130 without, e.g., being precipitated.

According to example embodiments, an electrode cell may be defined by the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, folding, or the like, of the separator 140.

The electrode assembly 150 may be accommodated in a case 160 together with an electrolyte solution to define a lithium secondary battery. According to example embodiments, a non-aqueous electrolyte solution may be used as the electrolyte solution.

The non-aqueous electrolyte solution may include a lithium salt and an organic solvent. The lithium salt may be represented by, e.g., Li⁺X⁻. Examples of the anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF_{3C}F₂SO₂)₂N⁻, or the like.

The organic solvent may include, e.g., propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 2, electrode tabs (a cathode tab and an anode tab) may protrude from each of the cathode current collectors 105 and the anode current collector 125 included in to each electrode cell, and may extend to one end portion of the case 160. The electrode tabs may be fused together with the one end portion of the case 160 to form electrode leads (a cathode lead 107 and an anode lead 127) that extend or are exposed to an outside of the case 160.

Although FIG. 2 illustrates that the cathode lead 107 and the anode lead 127 protrude from an upper side of the case 160 in a plan view, positions of the electrode leads are not limited thereto. For example, the electrode leads may protrude from at least one of both lateral sides of the case 160, or may protrude from a lower side of the case 160. Alternatively, the cathode lead 107 and the anode lead 127 may be formed to protrude from different sides of the case 160.

The lithium secondary battery may be manufactured in, e.g., a cylindrical type using a can, a prismatic type, a pouch-type, a coin-type.

The present disclosure includes the following numbered aspects:
Aspect 1: A cathode active material for a lithium secondary battery, including: a lithium-transition metal oxide particle; and a coating layer formed on a surface of the lithium-transition metal oxide particle, the coating layer including Li₃PO₄ and an oxide represented by Chemical Formula 1, wherein a content of Li₃PO₄ in the coating layer is in a range from 10 mol% to 60 mol%:

   [Chemical Formula 1] Li_{w}Tiₓ(PO₄)₃-(Al₂O₃)_{y}

   wherein, in Chemical Formula 1. 0≤w, x≥4/3, y>0, 0<x+y≤6, and 0.125 ≤y/x≤0.5.
Aspect 2: The cathode active material for a lithium secondary battery according to aspect 1, wherein the lithium-transition metal oxide particle includes a lithium-transition metal oxide particle having a single particle form.
Aspect 3: The cathode active material for a lithium secondary battery according to any one of aspects 1 and 2, wherein a content of Li₃PO₄ in the coating layer is in a range from 10 mol% to 45 mol%.
Aspect 4: The cathode active material for a lithium secondary battery according to any one of aspects 1 to 3, wherein the oxide of Chemical Formula 1 includes a NASICON structure.
Aspect 5: The cathode active material for a lithium secondary battery according to any one of aspects 1 to 4, wherein a total content of Al, Ti and P in the oxide represented by Chemical Formula 1 is 5,000 wtppm or less.
Aspect 6: The cathode active material for a lithium secondary battery according to any one of aspect 1 to 5, wherein an average particle diameter (D50) of particles of the cathode active material is in a range from 2.9 µm to 4.0 µm.
Aspect 7: The cathode active material for a lithium secondary battery according to any one of aspects 1 to 6, wherein a span value of particles of the cathode active material defined by Equation 1 is in a range from 1.06 to 1.35:

   $span value = \left(D90-D10\right) / D 50$
   wherein, in Equation 1, D10, D50 and D90 are particle diameters at 10%, 50% and 90% points, respectively, in a volume particle size distribution of the cathode active material measured by a laser diffraction method.
Aspect 8: The cathode active material for a lithium secondary battery according to any one of aspects 1 to 7, wherein a residual lithium content on a surface of the cathode active material is 9,500 wtppm or less.
Aspect 9: The cathode active material for a lithium secondary battery according to any one of aspects 1 to 8, wherein a residual lithium content on a surface of the cathode active material is 9,000 wtppm or less.
Aspect 10: A lithium secondary battery, including: a cathode comprising the cathode active material for a lithium secondary battery according to any one of aspects 1 to 9; and an anode opposing the cathode.
Aspect 11: A method of preparing a cathode active material for a lithium secondary battery, including: forming a mixture by mixing a transition metal precursor, a lithium source, an Al source, a Ti source and a P source; and heat-treating the mixture, wherein the P source comprises Li₃PO₄, wherein the prepared cathode active material includes: a lithium-transition metal oxide particle; and a coating layer formed on a surface of the lithium-transition metal oxide particle, the coating layer including Li₃PO₄ and an oxide represented by Chemical Formula 1, wherein a content of Li₃PO₄ in the coating layer is in a range from 10 mol% to 60 mol%:

   [Chemical Formula 1] Li_{w}Tiₓ(PO₄)₃-(Al₂O₃)_{y}

   wherein, in Chemical Formula 1. 0≤w, x≥4/3, y>0, 0<x+y≤6, and 0.125 ≤y/x≤0.5.
Aspect 12: The method of claim 11, wherein a molar ratio of the Al source, the Ti source, and the P source is (1 to 4):(1 to 4):(2 to 3).
Aspect 13: The method of any one of aspect 11 and 12, wherein at least one of forming the mixture and the heat-treating is performed by a dry process.

### Example 1

### (1) Preparation of Cathode Active Material

Based on 1 mol of Ni_{0.88}Co_{0.09}Mn_{0.03}(OH)₂, 1.01 mol of LiOH·H₂O, 0.2 mol% (0.002 mol) of Al₂O₃, 0.2 mol% (0.002 mol) of TiO₂, and 0.3 mol% (0.003 mol) of Li₃PO₄ were added to a dry high-speed mixer and uniformly mixed for 20 minutes. The mixture was placed in a calcination furnace, heated to 850 °C at a heating rate of 2 °C/min, and maintained at the temperature for 4 hours for a first heat treatment. Thereafter, a second heat treatment was performed by maintaining a reduced temperature of 720 °C for 12 hours.

During the temperature increase and the temperature maintenance, oxygen was continuously passed at a flow rate of 10 mL/min. After the calcination was completed, natural cooling was performed to room temperature, followed by pulverization and classification to prepare a cathode active material including a coating layer having a composition represented by Lig Ti₂(POa)₃-(ALl₂0₃).

### Examples 2 to 10

A cathode active material was prepared by the same method as that in Example 1, except that the composition of the P source which was Li₃PO₄ and (NH₄)₂HPO₄ (DAP), the Al source, the Ti source and the P source, the temperature of the reactor, and the composition of Li_{w}Tiₓ(PO₄)₃-(Al₂O₃)_{y} were adjusted as shown in Table 1 below.

### Comparative Examples 1 to 11

A cathode active material was prepared by the same method as in Example 1, except that the composition of the P source which was Li₃PO₄ and (NH₄)₂HPO₄ (DAP), the Al source, the Ti source and the P source, and the temperature of the reactor were adjusted as shown in Table 1 below.

**[Table 1]**

| | coating source (mol%) | | | | Li_{w}Tiₓ(PO₄)₃-(Al₂O₃)_{y} | | | | | Li₃PO₄ content based on coating layer (mol%) | calcination temperature |
|---|---|---|---|---|---|---|---|---|---|---|---|
| | Ti source | Al source | P source | | | | | | | | |
| | | | DAP | Li₃PO₄ | w | x | y | x+y | y/x | | |
| Example 1 | 0.2 | 0.2 | - | 0.3 | 9 | 2 | 1 | 3 | 0.5 | 42.8 | 850°C |
| Example 2 | 0.2 | 0.1 | - | 0.3 | 9 | 2 | 0.5 | 2.5 | 0.25 | 50 | |
| Example 3 | 0.4 | 0.1 | - | 0.3 | 9 | 4 | 0.5 | 4.5 | 0.125 | 37.5 | |
| Example 4 | 0.4 | 0.2 | - | 0.3 | 9 | 4 | 1 | 5 | 0.25 | 33.3 | |
| Example 5 | 0.4 | 0.3 | - | 0.3 | 9 | 4 | 1.5 | 5.5 | 0.375 | 30 | |
| Example 6 | 0.4 | 0.4 | - | 0.3 | 9 | 4 | 2 | 6 | 0.5 | 27.3 | |
| Example 7 | 0.2 | 0.2 | 0.1 | 0.2 | 6 | 2 | 1 | 3 | 0.5 | 28.6 | |
| Example 8 | 0.2 | 0.2 | 0.2 | 0.1 | 3 | 2 | 1 | 3 | 0.5 | 14.3 | |
| Comparative Example 1 | - | - | - | - | 0 | - | - | - | - | - | 900°C |
| Comparative Example 2 | - | - | - | - | 0 | - | - | - | - | - | 850°C |
| Comparative Example 3 | 0.2 | - | - | - | 0 | 2 | - | - | - | - | |
| Comparative Example 4 | - | 0.2 | - | - | 0 | - | 1 | - | - | - | |
| Comparative Example 5 | - | - | - | 0.2 | 6 | - | - | - | - | 100 | |
| Comparative Example 6 | 0.5 | 0.1 | - | 0.3 | 9 | 5 | 0.5 | 5.5 | 0.1 | 30 | |
| Comparative Example 7 | 0.2 | 0.5 | - | 0.3 | 9 | 2 | 2.5 | 4.5 | 1.25 | 30 | |
| Comparative Example 8 | 0.2 | 0.2 | 0.3 | - | 0 | 2 | 1 | 3 | 0.5 | - | |
| Comparative Example 9 | 0.2 | 0.2 | 0.25 | 0.05 | 1.5 | 2 | 1 | 3 | 0.5 | 7.1 | |
| Comparative Example 10 | 0.1 | 0.1 | - | 0.6 | 18 | 1 | 0.5 | 1.5 | 0.5 | 75 | |
| Comparative Example 11 | 0.05 | 0.2 | - | 0.3 | 9 | 0.5 | 1 | 1.5 | 2 | 54.5 | |

### Fabrication of lithium secondary battery

The cathode active material, carbon black as a conductive material, and PVDF as a binder were mixed in a weight ratio of 93:5:2 and dispersed in N-methyl-2-pyrrolidone to prepare a slurry. The slurry was coated on a surface of an aluminum current collector (thickness: 20 µm), and then dried and pressed to prepare a cathode.

A lithium metal with a thickness of 1.2 T was used as an anode.

The cathode and the anode were each notched to a predetermined size, and stacked with a separator (polyethylene, thickness: 13µm) interposed therebetween. An electrolyte solution was injected to fabricate a 2016 coin cell.

A 1 M LiPF₆ solution using a mixed solvent containing ethylene carbonate and ethyl methyl carbonate in a volume ratio of 1:1 was used as the electrolyte solution.

### Experimental Example

### (1) Evaluation of cathode active material

### 1) Measurement of Al, Ti and P wtppm in coating layer

0.015 g of particles of the cathode active material of each of Examples and Comparative Examples was collected, and the particles of the cathode active material were dissolved using a 0.1 M hydrochloric acid aqueous solution and 0.1 M hydrogen peroxide. Thereafter, the dissolved sample was heated to remove chlorine and hydrogen peroxide, and the sample was cooled to room temperature and then diluted with ultrapure water.

For the diluted sample, a total weight of transition metals and each weight of Al, Ti and P included in the metal coating were measured using an inductively coupled plasma optical emission spectrometer (SPS3000, SII nanotechnology).

The measurement results of Al, Ti and P wtppms in the coating layer of the cathode active material are shown in Table 2 below.

### 2) Measurement of particle diameter and particle size distribution parameters

Using a laser diffraction method (Microtrac, MT 3000), a volume particle size distribution of the cathode active material was measured, and D10, D50 and D90 of the cathode active material were calculated based on the particle diameters at points of 10%, 50%, and 90% of the volume particle size distribution, respectively. The results are shown in Table 2 below.

**[Table 2]**

| | Al, Ti, P contents (wtppm) | | | | D10 | D50 | D90 | Span |
|---|---|---|---|---|---|---|---|---|
| | Al (a) | Ti (b) | P(c) | a+b+c | | | | |
| Example 1 | 500 | 940 | 790 | 2230 | 2.15 | 3.62 | 6.11 | 1.13 |
| Example 2 | 510 | 440 | 750 | 1700 | 2.14 | 3.54 | 6.39 | 1.23 |
| Example 3 | 1020 | 450 | 690 | 2160 | 2.13 | 3.35 | 6.11 | 1.22 |
| Example 4 | 1050 | 900 | 700 | 2650 | 2.07 | 3.21 | 5.64 | 1.15 |
| Example 5 | 1100 | 1350 | 680 | 3130 | 2.09 | 3.18 | 5.71 | 1.14 |
| Example 6 | 1000 | 1840 | 670 | 3510 | 2.01 | 3.12 | 5.55 | 1.13 |
| Example 7 | 460 | 870 | 670 | 2000 | 1.98 | 3.09 | 5.46 | 1.13 |
| Example 8 | 480 | 930 | 830 | 2240 | 1.96 | 3.07 | 5.58 | 1.18 |
| Comparative Example 1 | - | - | - | - | 1.9 | 2.98 | 5.38 | 1.17 |
| Comparative Example 2 | - | - | - | - | 1.29 | 2.54 | 4.68 | 1.33 |
| Comparative Example 3 | 600 | - | - | - | 1.18 | 2.45 | 4.28 | 1.27 |
| Comparative Example 4 | - | 1010 | - | - | 1.25 | 2.48 | 4.43 | 1.28 |
| Comparative Example 5 | - | - | 850 | - | 1.85 | 3.21 | 5.46 | 1.12 |
| Comparative Example 6 | 500 | 2250 | 800 | 3550 | 1.85 | 3.22 | 5.94 | 1.27 |
| Comparative Example 7 | 1270 | 910 | 750 | 2930 | 1.8 | 3.18 | 5.94 | 1.3 |
| Comparative Example 8 | 500 | 930 | 850 | 2280 | 1.4 | 2.77 | 5.03 | 1.31 |
| Comparative Example 9 | 450 | 910 | 850 | 2210 | 1.42 | 2.8 | 5.04 | 1.29 |
| Comparative Example 10 | 270 | 450 | 1500 | 2220 | 1.24 | 2.97 | 5.54 | 1.45 |
| Comparative Example 11 | 120 | 950 | 800 | 1870 | 2.03 | 3.17 | 6.11 | 1.29 |

### (2) Secondary battery evaluation

### 1) Measurement of residual lithium

2.5 g of the cathode active material powder of Examples and Comparative Examples and 100 g of ultrapure water were put into a 100 ml beaker and stirred for 10 minutes. After being stirred, the cathode active material powder was filtered, 0.1 mol/L hydrochloric acid was added dropwise to 60 g of remaining filtrate, and a pH of the filtrate was measured using a pH meter at 25°C. Setting A ml as a titration amount of hydrochloric acid when the pH becomes 8.3±0.1 and B ml as a titration amount of hydrochloric acid when the pH becomes 4.5±0.1, concentrations of Li₂CO₃ and LiOH remaining in the cathode active material were calculated from equations below.${Li}_{2} {CO}_{3} concentration \left(mass%\right) = \left\{0.1\times \left(B-A\right)/1000\right\} \times \left\{73.882/\left(20\times 60/100\right)\right\} \times 100$$LiOH concentration \left(mass%\right) = \left\{0.1\times \left(2A-B\right)/1000\right\} \times \left\{23.941/\left(20\times 60/100\right)\right\} \times 100$

### 2) C-rate evaluation

Each lithium secondary battery fabricated according to Examples and Comparative Examples was repeatedly charged (CC-CV 0.5C 4.3V 0.05C CUT-OFF) and discharged (CC 0.5C 3.0V CUT-OFF) in a 25°C chamber to measure rate characteristics.

Specifically, 0.1C charging and 0.1C discharging were performed twice, and a 0.1C discharge capacity was measured, and 0.5C charging and 4C discharging were performed once, and a 4C discharge capacity was measured.

The rate property was calculated by dividing the 4C discharge capacity by the 0.1C discharge capacity and multiplying by 100.

The residual lithium measurement results and the rate property evaluation results are shown in Table 3 below.

**[Table 3]**

| | 0.1C charge (mAh/g) | 0.1C discharge (mAh/g) | efficiency (%) | 4C/0.1C capacity ratio | residual lithium | | |
|---|---|---|---|---|---|---|---|
| | | | | | LiOH | Li₂CO₃ | Total |
| Example 1 | 235.3 | 210.8 | 89.6 | 84.10% | 3350 | 3570 | 6920 |
| Example 2 | 235.4 | 209.2 | 88.9 | 83.60% | 3340 | 4000 | 7340 |
| Example 3 | 235.5 | 209.9 | 89.1 | 83.40% | 3720 | 3990 | 7710 |
| Example 4 | 235.9 | 209.3 | 88.7 | 83.50% | 3450 | 4090 | 7540 |
| Example 5 | 235.9 | 209.7 | 88.9 | 83.50% | 3830 | 3810 | 7640 |
| Example 6 | 234 | 208.7 | 89.2 | 83.40% | 3770 | 3910 | 7680 |
| Example 7 | 238.0 | 209.9 | 88.2 | 84.05% | 2590 | 4660 | 7250 |
| Example 8 | 236.1 | 208.5 | 88.3 | 83.98% | 2910 | 4000 | 6910 |
| Comparative Example 1 | 228.5 | 196.1 | 85.9 | 79.40% | 17830 | 5990 | 23820 |
| Comparative Example 2 | 234.3 | 201.2 | 85.9 | 80.00% | 4450 | 5490 | 9940 |
| Comparative Example 3 | 232.5 | 200.3 | 86.2 | 81.10% | 6700 | 3320 | 10020 |
| Comparative Example 4 | 233.7 | 200.8 | 85.9 | 80.50% | 5890 | 3320 | 9210 |
| Comparative Example 5 | 232.5 | 202.1 | 86.9 | 79.20% | 4830 | 4810 | 9640 |
| Comparative Example 6 | 230.4 | 201.4 | 87.4 | 79.50% | 5510 | 3450 | 8960 |
| Comparative Example 7 | 231.5 | 201.1 | 86.9 | 79.70% | 5160 | 3790 | 8950 |
| Comparative Example 8 | 233.5 | 205.2 | 87.9 | 82.54% | 3500 | 4590 | 8090 |
| Comparative Example 9 | 234.5 | 204.8 | 87.3 | 80.86% | 4400 | 4910 | 9310 |
| Comparative Example 10 | 234.1 | 204.7 | 87.4 | 80.97% | 5410 | 3440 | 8850 |
| Comparative Example 11 | 233.8 | 203.1 | 86.9 | 80.46% | 4120 | 4780 | 8900 |

Referring to Table 2, the particle growth of the cathode active material of Examples was improved.

Referring to Table 3, the residual lithium in the secondary batteries according to Examples decreased. Additionally, in the secondary batteries according to Examples, the 4C capacity relative to the 0.1C capacity was improved.

In Comparative Example 1 where the Li₃PO₄ coating layer was not included, Li₃PO₄ did sufficiently fill the pores of the cathode active material and the particle growth was hindered.

In Comparative Examples 5, 10 and 11 having high Li₃PO₄ contents, the particle growth was sufficiently achieved due to Li₃PO₄, but an ion conductivity was decreased.

In Comparative Example 3 or Comparative Example 4 where only Ti or Al was used as the coating source, D50 was relatively decreased and the residual lithium was increased.

The above description is merely an example applying the principles of the present disclosure, and other configurations may be further included within a range that does not depart from the scope of the present disclosure.

## Claims

1. A cathode active material for a lithium secondary battery, comprising:
a lithium-transition metal oxide particle; and
a coating layer formed on a surface of the lithium-transition metal oxide particle, the coating layer comprising Li₃PO₄ and an oxide represented by Chemical Formula 1,
wherein a content of Li₃PO₄ in the coating layer is in a range from 10 mol% to 60 mol%:
[Chemical Formula 1] Li_{w}Tiₓ(PO₄)₃-(Al₂O₃)_{y}
wherein, in Chemical Formula 1. 0≤w, x≥4/3, y>0, 0<x+y≤6, and 0.125 ≤y/x≤0.5.

2. The cathode active material for a lithium secondary battery according to claim 1, wherein the lithium-transition metal oxide particle comprises a lithium-transition metal oxide particle having a single particle form.

3. The cathode active material for a lithium secondary battery according to any one of claims 1 and 2, wherein a content of Li₃PO₄ in the coating layer is in a range from 10 mol% to 45 mol%.

4. The cathode active material for a lithium secondary battery according to any one of claims 1 to 3, wherein the oxide of Chemical Formula 1 comprises a NASICON structure.

5. The cathode active material for a lithium secondary battery according to any one of claims 1 to 4, wherein a total content of Al, Ti and P in the oxide represented by Chemical Formula 1 is 5,000 wtppm or less.

6. The cathode active material for a lithium secondary battery according to any one of claims 1 to 5, wherein an average particle diameter (D50) of particles of the cathode active material is in a range from 2.9 µm to 4.0 µm.

7. The cathode active material for a lithium secondary battery according to any one of claims 1 to 6, wherein a span value of particles of the cathode active material defined by Equation 1 is in a range from 1.06 to 1.35: $span value = \left(D90-D10\right) / D 50$ wherein, in Equation 1, D10, D50 and D90 are particle diameters at 10%, 50% and 90% points, respectively, in a volume particle size distribution of the cathode active material measured by a laser diffraction method.

8. The cathode active material for a lithium secondary battery according to any one of claims 1 to 7, wherein a residual lithium content on a surface of the cathode active material is 9,500 wtppm or less.

9. The cathode active material for a lithium secondary battery according to any one of claims 1 to 8, wherein a residual lithium content on a surface of the cathode active material is 9,000 wtppm or less.

10. A lithium secondary battery, comprising:
a cathode comprising the cathode active material for a lithium secondary battery according to any one of claims 1 to 9; and
an anode opposing the cathode.

11. A method of preparing a cathode active material for a lithium secondary battery, comprising:
forming a mixture by mixing a transition metal precursor, a lithium source, an Al source, a Ti source and a P source; and
heat-treating the mixture,
wherein the P source comprises Li₃PO₄,
wherein the prepared cathode active material comprises:
a lithium-transition metal oxide particle; and
a coating layer formed on a surface of the lithium-transition metal oxide particle, the coating layer comprising Li₃PO₄ and an oxide represented by Chemical Formula 1,
wherein a content of Li₃PO₄ in the coating layer is in a range from 10 mol% to 60 mol%:
[Chemical Formula 1] Li_{w}Tiₓ(PO₄)₃-(Al₂O₃)_{y}
wherein, in Chemical Formula 1. 0≤w, x≥4/3, y>0, 0<x+y≤6, and 0.125 ≤y/x≤0.5.

12. The method of claim 11, wherein a molar ratio of the Al source, the Ti source, and the P source is (1 to 4):(1 to 4):(2 to 3).

13. The method of any one of claims 11 and 12, wherein at least one of forming the mixture and the heat-treating is performed by a dry process.
